# EUROPÄISCHE PATENTANMELDUNG

(11) **EP 1 176 072 A2**
(43) Veröffentlichungstag der Anmeldung: **30.01.2002**
(21) Anmeldenummer: 01116284.9
(22) Anmeldetag: 05.07.2001
(51) Int. Cl.: B60S 3/04

(54) **Behandlungsanlage für Fahrzeuge, insbesondere Wasch- oder Polieranlage**

(30) Priorität: 25.07.2000 DE 20012839 U
(71) Anmelder: WashTec Holding GmbH, 86153 Augsburg (DE)
(72) Erfinder: Auer, Robert, 86391 Stadtbergen (DE)
(74) Vertreter: Schwarz, Thomas, Dipl.-Ing.

(57) **Zusammenfassung**

Die Erfindung betrifft eine Behandlungsanlage für Fahrzeuge, insbesondere Wasch- oder Polieranlage, bestehend aus einer Behandlungseinrichtung mit mindestens einer Düseneinrichtung, die mindestens eine längliche Düsenanordnung mit ein oder mehreren seitlichen Düsenauslässen für fluidische Sprühstrahlen aufweist. Zur Verbesserung des Abtrageffekts ist die Düsenanordnung (8) während des Betriebs um ihre Längsachse (22) umlaufend rotierend angetrieben.

## Beschreibung

Die Erfindung betrifft eine Behandlungsanlage für Fahrzeuge, insbesondere eine Wasch- oder Polieranlage mit den Merkmalen im Oberbegriff des Hauptanspruches.

Eine solche Behandlungsanlage in Form einer Fahrzeugwaschanlage ist aus der EP-A-0 507 757 bekannt. Die Waschanlage besitzt Düseneinrichtungen für die Hochdruckwäsche und die Trocknung des Fahrzeuges, die jeweils mit länglichen Düsenanordnungen in Gestalt von Düsenrohren mit mehreren seitlichen Düsenauslässen für die Trockenluft- und Hochdrucksprühstrahlen ausgerüstet sind. Hierbei sind Dach- und Seitendüsen für die Behandlung der Oberseite und der Seitenflächen des Fahrzeuges vorhanden. Die Düsenrohre können bei der Hochdruckwascheinrichtung um ihre Längsachse oszillieren, wobei die Sprühstrahlen auf dem Fahrzeug eine hin- und herschwingende Bewegung ausführen. Zumindest die Dachdüsen werden dabei mittels eines Portals und geeigneter Düsenantriebe konturengesteuert über das Fahrzeug bewegt. Die Dachtrockendüse kann ebenfalls um ihre Längsachse verstellt werden, um die Trockenluftstrahlen an die beaufschlagte Kontur des Fahrzeuges anzupassen. Bei den oszillierenden Waschdüsen und bei den anstellbaren Trockendüsen ist der Drehwinkel um die Längsachse begrenzt. Mit dieser vorbekannten Fahrzeugwaschanlage lassen sich bereits bessere Wasch- und Trockenergebnisse gegenüber anderen konventionellen Anlagen erreichen, bei denen die Düsenrohre keine Beweglichkeit um die Längsachse haben.

Ähnliche Waschanlagen mit oszillierenden Düsenanordnungen zeigen ferner die DE-A-40 27 613 und die EP-A-0 142 786.

Es ist Aufgabe der vorliegenden Erfindung, eine verbesserte Behandlungsanlage aufzuzeigen.

Die Erfindung löst diese Aufgabe mit den Merkmalen im Hauptanspruch.
Bei der erfindungsgemäßen Behandlungsanlage kommen ein oder mehrere längliche Düsenanordnungen mit seitlich austretenden Sprühstrahlen zum Einsatz, die um ihre Längsachse umlaufend rotierend angetrieben sind. Die Düsenanordnung führt im Betrieb ein Vielzahl vollständiger Umdrehungen aus. Die Sprühstrahlen rotieren dabei um die Längsachse, wodurch sich ein fräserartiger Abtragseffekt auf dem Fahrzeug ergibt.

Die Düseneinrichtung kann als Trockeneinrichtung, als Hochdruckwascheinrichtung oder in beliebiger anderer Weise und Funktion ausgebildet sein. Bei der Hochdruckwäsche schälen die rotierenden Sprühstrahlen den Schmutz von der Fahrzeugoberfläche schonend und zugleich hocheffektiv ab. Der Schmutz wird ähnlich wie beim spanabhebenden Abtrag eines Fräsers gelöst und entfernt. Bei einer Trockeneinrichtung werden die Flüssigkeitsreste auf dem Fahrzeug ähnlich abgelöst und durch die kontinuierlich in gleicher Richtung umlaufenden Sprühstrahlen in gleichbleibender Richtung weggetrieben.

Für die Wasch- und Trockeneffekte ist es günstig, wenn die Drehzahl so hoch gewählt wird, dass die Umfangsgeschwindigkeit des Sprühstrahles am Fahrzeug größer als die Laufgeschwindigkeit der Düsenanordnung relativ zum Fahrzeug ist. Hierdurch treffen die Sprühstrahlen mehrmals nacheinander auf die beaufschlagten Fahrzeugbereiche, was den Wasch- und Trockeneffekt steigert.

Ferner ist es günstig, wenn die Drehrichtung der Düsenanordnung auf die relative Laufrichtung zwischen der Düsenanordnung und dem Fahrzeug abgestimmt ist, wobei insbesondere der rotierende Sprühstrahl sich auf der Fahrzeugoberfläche in Laufrichtung bewegt. Hierdurch schiebt die wandernde Düsenanordnung den abgelösten Schmutz bzw. das Fahrzeug in der Laufrichtung vor sich her, so dass Schmutz und Flüssigkeit vom Fahrzeug vollständig entfernt und weggeblasen werden können. Die Drehrichtung der Düsenanordnung kann reversibel sein, um bei Vor- und Rücklauf über das Fahrzeug eine entsprechende Anpassung an die wechselnde Laufrichtung zu ermöglichen.

In den Unteransprüchen sind weitere vorteilhafte Ausgestaltungen der Erfindung und insbesondere der Düsenanordnung angegeben.

Die Erfindung ist in den Zeichnungen beispielsweise und schematisch dargestellt. Im einzelnen zeigen:
- Figur 1:: eine Fahrzeugbehandlungsanlage als Portalwaschanlage mit einer Düseneinrichtung und rotierenden länglichen Düsenanordnungen in Seitenansicht,
- Figur 2:: eine Variante der Waschanlage als Waschstraße mit einer ähnlichen Düseneinrichtung in Seitenansicht,
- Figur 3 bis 7:: verschiedene Varianten für die Gestaltung von Düsenrohren und Düsenauslässen in verschiedenen Ansichten,
- Figur 8:: eine Düsenanordnung mit einer außenseitigen Abdeckung oder einer beweglichen Blende im Querschnitt und
- Figur 9:: eine Variante zum Düsenrohr.

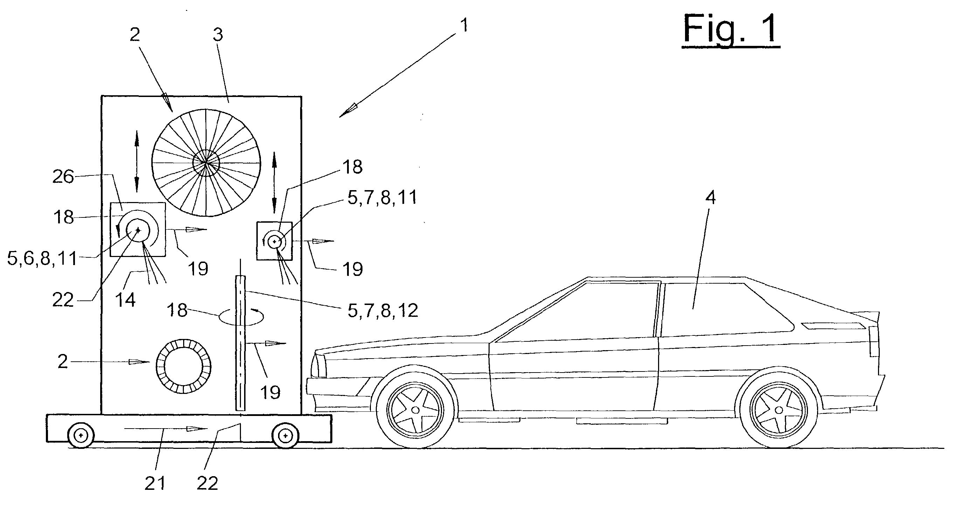

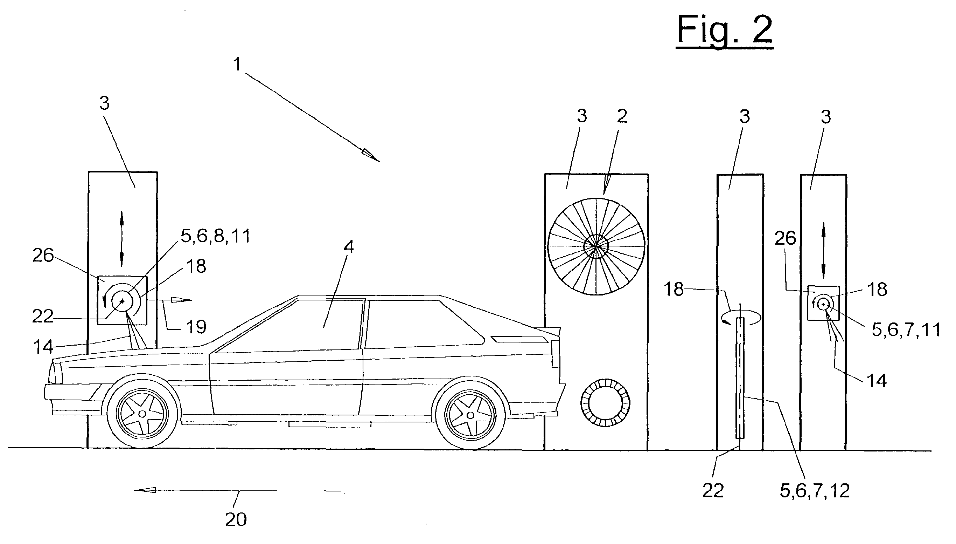

Figur 1 und 2 zeigen eine Fahrzeugbehandlungsanlage (1), die hier jeweils als Fahrzeugwaschanlage ausgebildet ist. Alternativ kann es sich auch um eine Polieranlage oder eine beliebige andere Behandlungsanlage handeln. Die Fahrzeugbehandlungsanlage (1) kann in ihrer Konzeption unterschiedlich ausgestaltet sein. Figur 1 zeigt eine sogenannte Portalwaschanlage, bei der das Fahrzeug (4) still steht und sich ein Portal (3) mit einer Behandlungseinrichtung (2) gegenüber dem Fahrzeug (4) in Fahrtrichtung (21) bewegt. Figur 2 zeigt demgegenüber eine Variante in der Ausgestaltung als Waschstraße, bei der das Fahrzeug (4) durch eine Schleppeinrichtung (nicht dargestellt) in Fahrtrichtung (20) gegenüber ein oder mehreren Portalen (3) mit verschiedenen Komponenten der Behandlungseinrichtung (2) bewegt wird. Die Portale (3) können stationär oder begrenzt beweglich sein. Daneben sind auch noch weitere beliebige Varianten, z.B. Doppelportal-Waschanlagen, Taktanlagen, Durchfahrtanlagen oder dergleichen möglich.

Die Fahrzeugbehandlungsanlage (1) ist mit einer Behandlungseinrichtung (2) ausgerüstet. Diese beinhaltet in der gezeigten Ausführungsform z.B. eine Trockeneinrichtung (6) und eine geeignete Wascheinrichtung mit einer Sprüheinrichtung (7), insbesondere einer Hochdruckwascheinrichtung. Außerdem können ein oder mehrere Waschbürsten in Form von Dach- und/oder Seitenbürsten sowie eine Radwascheinrichtung vorhanden sein. Ferner können geeignete Auftragsvorrichtungen für Reinigungsschaum, Spülwasser, flüssige Trockenhilfe, etc. vorhanden sein. Die Behandlungseinrichtung (2) kann darüber hinaus weitere beliebige Komponenten aufweisen.

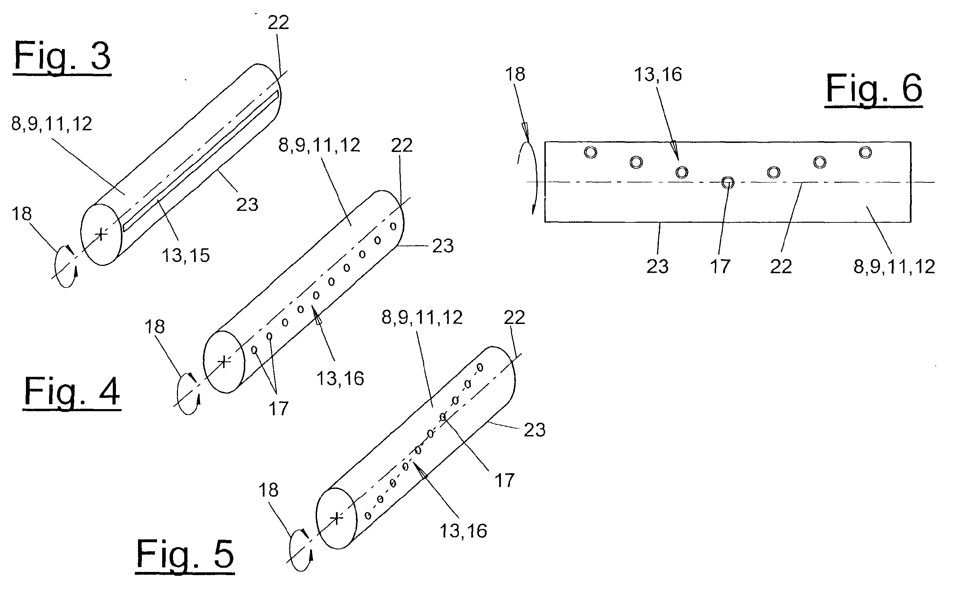

Die Behandlungsanlage (1) weist mindestens eine Düseneinrichtung (5) auf, die jeweils mindestens eine längliche Düsenanordnung (8) mit ein oder mehreren seitlich austretenden Sprühstrahlen (14) besitzt, welche in Figur 3 bis 9 näher dargestellt ist. Mindestens eine dieser vorzugsweise mehrfach vorhandenen länglichen Düsenanordnungen (8) kann um ihre Längsachse (22) umlaufend rotieren und wird hierdurch durch einen geeigneten Düsenantrieb (26) angetrieben. Der Pfeil (18) gibt jeweils die Drehrichtung an.

Die längliche Düsenanordnung (8) erstreckt sich jeweils entlang der beaufschlagten Seite am Fahrzeug (4). Hierbei kann es sich z.B. um eine Dachdüse (11) handeln, die im wesentlichen horizontal ausgerichtet ist und sich quer und vorzugsweise über die gesamte Breite des Fahrzeugs (4) erstreckt. Alternativ oder zusätzlich kann die Düsenanordnung (8) als im wesentlichen vertikale Seitendüse (12) ausgebildet sein, die sich entlang der Seitenfläche des Fahrzeugs (4) erstreckt. Daneben sind auch andere Düsenausrichtungen möglich. Insbesondere können die Düsenanordnungen (8) abweichend von der Horizontalen oder Vertikalen auch geneigt angeordnet sein.

Die Düsenanordnungen (8) bewegen sich in der durch Pfeile (19) angegebenen Laufrichtung relativ zum Fahrzeug (4). Hierbei kann entsprechend der Anlagengestaltung die Düsenanordnung (8) gegenüber dem Fahrzeug (4) oder das Fahrzeug (4) gegenüber der Düsenanordnung (8) bewegt werden. Bei einer Waschstraße mit beweglichen Portalen ist auch eine kombinative Bewegung beider Teile möglich.

Die Düsenanordnungen (8) sind jeweils in einem Portal (3) oder einer anderen geeigneten Halterung gelagert und können außer der vorerwähnten Drehbewegung auch eine beliebige anders geartete Transportbewegung relativ zum Fahrzeug (4) ausführen. Dies sind vorzugsweise die in Figur 1 und 2 durch Pfeile angegebenen und vorzugsweise senkrechten Hebe- und Senkbewegungen. Eine translatorische Fahrbewegung in horizontaler Richtung ergibt sich durch die Fahrtrichtungen (20,21) von Fahrzeug (4) oder Portal (3). Alternativ können auch Schwenkbewegungen oder dergleichen andere beliebig geartete Transportbewegungen ausgeführt werden, indem die Düsenanordnungen (8) an Schwenkarmen oder dergleichen ähnlich wir in der EP-A-0 142 786 gelagert sind und von diesen bewegt werden. Die Transportbewegungen, insbesondere die Hebe- und Senkbewegungen, können wiederum durch geeignete Düsenantriebe (26) erzeugt werden.

Die Düsenanordnungen (8) bewegen sich in Laufrichtung (19) vorzugsweise konturengesteuert über das Fahrzeug (4). Dies können sowohl die Dachdüsen (11), wie auch die Seitendüsen (12). Die Höhen- und/oder Seitenkontur des Fahrzeuges (4) kann online über Lichtschranken oder geeignete andere vorzugsweise berührungslose Abtastmittel festgestellt werden. Alternativ kann die Fahrzeugkontur auch vorher in beliebig anderer geeigneter Weise durch ein Kamerasystem oder dergleichen aufgenommen und gespeichert werden. Auf eine Konturenabtastung oder Konturensteuerung kann alternativ aber auch verzichtet werden.

Die Düsenanordnungen (8) haben ein oder mehrere seitliche Düsenauslässe (13), aus denen die Sprühstrahlen (14) quer oder schräg austreten. Diese Sprühstrahlen (14) rotieren um die Längsachse (22). Hierbei überlagern sich die Drehbewegung (18) und die Laufbewegungen (19) der Sprühstrahlen (14) auf der Oberfläche des Fahrzeuges (4).

Die Drehgeschwindigkeit der Sprühstrahlen (14) bzw. der Düsenanordnungen (8) ist vorzugsweise so hoch eingestellt, dass die Umfangsgeschwindigkeit der rotierenden Sprühstrahlen (14) am Fahrzeug (4) größer als die Laufgeschwindigkeit (19) ist. Vorzugsweise ist die Umfangsgeschwindigkeit wesentlich größer als die Laufgeschwindigkeit, so dass die Sprühstrahlen (14) nacheinander mehrmals auf der gleichen Stelle am Fahrzeug (4) auftreffen.

Die Drehrichtung (18) der Sprühstrahlen (14) und der Düsenanordnung (8) kann beliebig gewählt werden. Vorzugsweise ist die Drehrichtung (18) mitlaufend, wobei der austretende Sprühstrahl (14) sich in der relativen Laufrichtung (19) über das Fahrzeug (4) bewegt. Die Sprühstrahlen (14) schieben dadurch die abgelösten Schmutz- oder Flüssigkeitspartikel in Laufrichtung (19) am Fahrzeug (4) vor sich her. Sie können ggf. dabei auch seitlich abgeleitet und vom Fahrzeug (4) entfernt werden.

Die Drehrichtung (18) kann reversibel sein. Während eines Wasch- oder Trockenlaufs bleibt die Drehrichtung (18) vorzugsweise gleich. Bei Wechsel von Hin- auf Rücklauf kann die Drehrichtung (18) vorzugsweise umgekehrt werden, so dass entsprechend der umgekehrten Laufrichtung (19) sich auch die Drehrichtung (18) ändert.

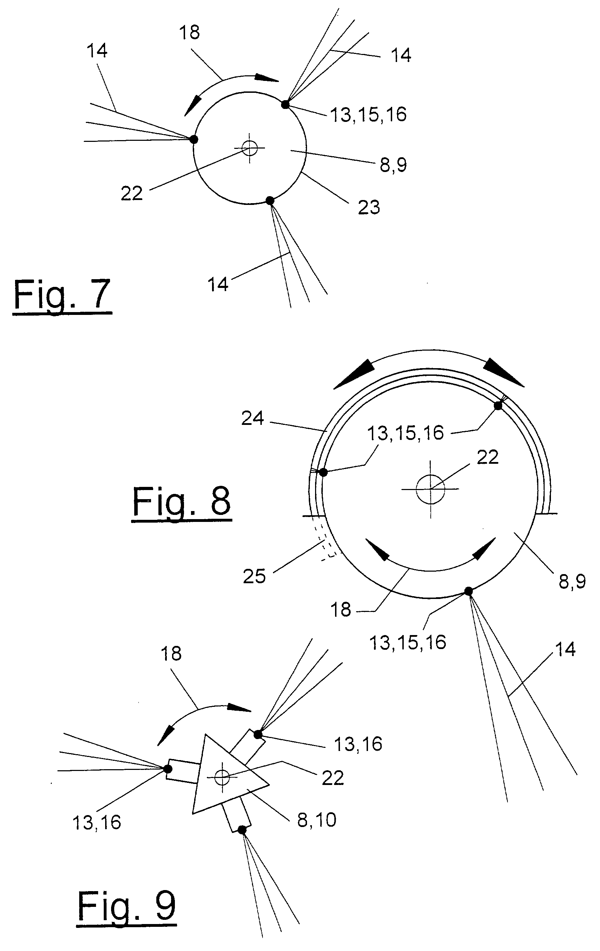

Figur 3 bis 9 zeigen verschiedene Varianten der Düsenanordnung (8). In Figur 3 bis 8 ist die Düsenanordnung (8) als Düsenrohr (9) ausgebildet. Figur 9 zeigt eine Variante mit einem spangenförmigen Halter (10), an dem ein oder mehrere Düsenreihen (16) befestigt sind.

Bei dem in Figur 3 gezeigten Düsenrohr ist der Düsenauslass (13) als längslaufender Düsenschlitz (15) im Rohrmantel (23) ausgebildet. Am Düsenschlitz (15) tritt ein entsprechend breiter Sprühstrahl (14) aus. Mit dem rotierenden Düsenrohr (9) dreht sich auch der Sprühstrahl (14) um die Rohrachse (22). Das Düsenrohr (9) ist stirnseitig in geeigneten Halterungen drehbar gelagert und ist mit dem eingangs genannten rotatorischen Düsenantrieb (26) verbunden. Das zu versprühende Fluid gelangt ebenfalls stirnseitig über geeignete Leitungen und Drehanschlüsse an ein oder zwei Seiten in das Düsenrohr (9) ein. Das aus einem Gas, vorzugsweise Trockenluft, oder einer Flüssigkeit, z. B. Wasser, bestehende Fluid wird extern von einer entsprechenden Versorgung mit einer Pumpeinrichtung (nicht dargestellt) über geeignete Leitungen zugeführt.

Bei der Variante von Figur 4 besteht der Düsenauslass (13) aus einer axialen Reihe (16) von Einzeldüsen (17). Aus letzteren treten einzelne Sprühstrahlen (14) aus. Die Düsenabstände sind so gewählt, dass die Sprühstrahlen (14) einander an der Auftreffstelle am Fahrzeug (4) überlappen.

In den Ausführungsformen von Figur 3 und 4 erstrecken sich der Düsenschlitz (15) und die Düsenreihe (16) parallel zur Rohrachse (22). In der Variante von Figur 5 ist die Düsenreihe (16) schräg zur Rohrachse (22) ausgerichtet und windet sich zumindest über einen Teilbereich des Rohrmantels (23). Die Düsenreihe (16) kann hierbei als gerade Linie oder als gewundene Schraubenlinie ausgebildet sein. Sie kann sich statt über einen Teilbereich auch über den gesamten Umfang des Rohrmantels (23) erstrecken. Durch die schräge oder gewundene Anordnung der Düsenreihe (16) ergibt sich eine entsprechende schräge Wirkkomponente der auftreffenden Sprühstrahlen (14) am Fahrzeug (4). Hierdurch kann eine Querkraft entwickelt werden, die die abgelösten Schmutz- oder Flüssigkeitspartikel schräg zur Fahrzeuglängsachse wegschiebt. Bei der Ausführungsform von Figur 5 kann die Düsenreihe (16) auch durch einen entsprechend ausgerichteten Düsenschlitz ersetzt werden.

Figur 6 zeigt eine weitere Variante für die Ausrichtung der Düsenreihe (16) oder des Düsenschlitzes (15). Die Düsenreihe (16) hat hier eine Pfeilform, die vorzugsweise mittensymmetrisch ist. Bei dieser Variante werden durch die Pfeilform die abgelösten Partikel nach zwei Seiten vom Fahrzeug (4) weggetrieben. Diese Ausbildungsvariante ist vornehmlich für eine einseitige Drehrichtung (18) geeignet, bei der die Spitze der Pfeilform vorausläuft. Die anderen vorbeschriebenen Varianten sind für beliebige Drehrichtungen (18) geeignet.

Bei den Ausführungsformen von Figur 3 bis 6 weist das Düsenrohr (9) jeweils einen stütz- oder rangenförmigen Düsenauslass (13) auf. Bei der Variante von Figur 7 sind mehrere am Umfang des Rohrmantels (23) verteilte Düsenauslässe (13) vorhanden. Vorzugsweise sind sie gleichmäßig verteilt. In der gezeigten Ausführungsform sind drei Düsenauslässe (13) vorhanden. Alternativ kann die Zahl und Verteilung auch beliebig anders gewählt werden. Hierbei sind auch die Ausrichtungen der Düsenschlitze (15) oder der Düsenreihen (16) beliebig in der vorbeschriebenen Weise variierbar.

Bei der Ausführungsform von Figur 8 ist wenigstens eine umfangsseitige Abdeckung (24) für das rotierende Düsenrohr (9) vorhanden. Diese deckt an der vom Fahrzeug abgewandten Seite die Düsenauslässe (13) ab. Hierdurch können die Sprühstrahlen (14) nur an der zum Fahrzeug gelegenen Seite austreten. Die Abdeckung (24) kann einen beliebigen Überdeckungswinkel haben. Vorzugsweise ist sie stationär gegenüber dem rotierenden Düsenrohr (9) angeordnet.

In Figur 8 ist auch eine Variante mit einer beweglichen Blende (25) gestrichelt dargestellt. Die Blende (25) ist in der Umfangsrichtung beweglich, so dass die für die Sprühstrahlen (14) vorgesehene Austrittsöffnung in der Winkelausrichtung und in der Größe verändert werden kann. Die Blende (25) kann hierbei unterschiedlich gestaltet sein. Zum einen kann die Abdeckung (24) als Blende (25) fungieren, wenn sie umfangsseitig verstellbar ist. Diese Verstellung kann mit einem Antrieb versehen sein, um die Abdeckung (24) oder Blende (25) entsprechend der Fahrzeugkontur zu verdrehen. Auf diese Weise wird die von der Abdeckung (24) oder Blende (25) frei gegebene Auslassöffnung für die Sprühstrahlen (14) entsprechend der Fahrzeugkontur winkelgerecht zum Fahrzeug hin ausgerichtet. Alternativ kann die Blende (25) auch durch ein oder zwei an den Enden der Abdeckung (24) beweglich gelagerten Deckleisten bestehen, die ebenfalls manuell oder motorisch herausgezogen oder eingeschoben werden können. Hierdurch lässt sich wiederum die Größe und Ausrichtung des Freiraums für den Austritt der Sprühstrahlen (14) beliebig variieren.

In der Variante von Figur 9 wird das vorbeschriebene Düsenrohr (9) durch einen rotierenden Halter (10) mit ein oder mehreren außenseitig angebrachten Düsenreihen (16) ersetzt. Die Düsenreihen (16) werden aus mehreren Einzeldüsen (17) gebildet, deren Reihenanordnung und Ausrichtung wie in Figur 4 bis 6 beliebig variieren kann. Die Einzeldüsen (17) sind durch geeignete Leitungen mit einer Fluidzuführung einzeln oder in der Reihe verbunden. Der Halter (10) kann massiv sein. Er kann eine beliebig geeignete Formgebung aufweisen. Bei der Variante von Figur 9 kann auch eine Abdeckung (24) bzw. eine Blende (25) wie in Figur 8 vorhanden sind.

Abwandlungen der gezeigten Ausführungsform sind in verschiedener Weise möglich. Zum einen kann die Anordnung und Ausbildung der Behandlungseinrichtung (2) variieren. Anstelle der Portale (3) können auch beliebige andere geeignete Tragvorrichtungen vorhanden sein, z. B. auf hochliegenden Schienen verfahrbare Quertraversen. Variabel sind ferner Zahl und Anordnung der Düsenanordnungen (8) bzw. der Düseneinrichtung (5). Die Düsenanordnungen (8) können auch in der Neigung und der Winkelausrichtung gegenüber dem Fahrzeug (4) verstellt werden. Sie können zudem drehbeweglich und dabei stationär angeordnet sein. Variationen sind auch hinsichtlich der Drehrichtung (18) möglich. Diese kann nach mehreren Umdrehungen auch während eines Laufs am Fahrzeug reversiert werden. Zudem ist es möglich, die Drehrichtung (18) gegenläufig zur Laufrichtung (19) zu machen.

### BEZUGSZEICHENLISTE

- 1: Behandlungsanlage, Waschanlage
- 2: Behandlungseinrichtung, Wascheinrichtung
- 3: Portal
- 4: Fahrzeug
- 5: Düseneinrichtung
- 6: Trockeneinrichtung, Trockendüse
- 7: Sprüheinrichtung, Hochdruckwascheinrichtung, HD-Düse
- 8: längliche Düsenanordnung
- 9: Düsenrohr
- 10: Halter
- 11: Dachdüse
- 12: Seitendüse
- 13: Düsenauslass
- 14: Sprühstrahl
- 15: Düsenschlitz
- 16: Düsenreihe
- 17: Einzeldüse
- 18: Drehrichtung
- 19: Laufrichtung Düse
- 20: Fahrtrichtung Fahrzeug
- 21: Fahrtrichtung Portal
- 22: Längsachse, Rohrachse
- 23: Rohrmantel
- 24: Abdeckung
- 25: Blende
- 26: Düsenantrieb

## Patentansprüche

1. Behandlungsanlage für Fahrzeuge, insbesondere Wasch- oder Polieranlage, bestehend aus einer Behandlungseinrichtung mit mindestens einer Düseneinrichtung, die mindestens eine längliche Düsenanordnung mit ein oder mehreren seitlichen Düsenauslässen für fluidische Sprühstrahlen aufweist, **dadurch gekennzeichnet, dass** die Düsenanordnung (8) während des Betriebs um ihre Längsachse (22) umlaufend rotierend angetrieben ist.

2. Behandlungsanlage nach Anspruch 1, **dadurch gekennzeichnet, dass** die Drehrichtung (18) der Düsenanordnung (8) so gewählt ist, dass der austretende Sprühstrahl (14) sich in der relativen Laufrichtung (19) der Düsenanordnung (8) über das Fahrzeug (4) bewegt.

3. Behandlungsanlage nach Anspruch 1 oder 2, **dadurch gekennzeichnet, dass** die Drehrichtung (18) der Düsenanordnung (8) reversibel ist.

4. Behandlungsanlage nach Anspruch 1, 2 oder 3, **dadurch gekennzeichnet, dass** die Drehgeschwindigkeit der Düsenanordnung (8) so groß ist, dass die Umfangsgeschwindigkeit des Sprühstrahls (14) am Fahrzeug (4) größer als die Laufgeschwindigkeit der Düsenanordnung (8) ist.

5. Behandlungsanlage nach einem der Ansprüche 1 bis 4, **dadurch gekennzeichnet, dass** die Düseneinrichtung (5) Bestandteil einer Trockeneinrichtung (6) und/oder einer Sprüheinrichtung (7), insbesondere einer Hochdruckwascheinrichtung, ist.

6. Behandlungsanlage nach einem der Ansprüche 1 bis 5, **dadurch gekennzeichnet, dass** die längliche Düsenanordnung (8) als Düsenrohr (9) ausgebildet ist.

7. Behandlungsanlage nach einem der Ansprüche 1 bis 6, **dadurch gekennzeichnet, dass** der Düsenauslass (13) beim Düsenrohr (9) als Düsenschlitz (15) oder als Reihe (16) von Einzeldüsen (17) im Rohrmantel (23) ausgebildet ist.

8. Behandlungsanlage nach einem der Ansprüche 1 bis 5, **dadurch gekennzeichnet, dass** die längliche Düsenanordnung (8) als stangenförmiger Halter (10) mit mindestens einer Reihe (16) von Einzeldüsen (17) ausgebildet ist.

9. Behandlungsanlage nach einem der Ansprüche 1 bis 7, **dadurch gekennzeichnet, dass** die längliche Düsenanordnung (8) mehrere im Umfang um ihre Längsachse (22) verteilte Düsenschlitze (15) oder Düsenreihen (16) aufweist.

10. Behandlungsanlage nach einem der Ansprüche 1 bis 9, **dadurch gekennzeichnet, dass** die Düsenschlitze (15) oder Düsenreihen (16) sich in gerader Richtung parallel zur Längsachse (22) der Düsenanordnung (8) erstrecken.

11. Behandlungsanlage nach einem der Ansprüche 1 bis 9, **dadurch gekennzeichnet, dass** die Düsenschlitze (15) oder Düsenreihen (16) mit einer Neigung zur Längsachse (22) der Düsenanordnung (8) angeordnet sind.

12. Behandlungsanlage nach Anspruch 11, **dadurch gekennzeichnet, dass** die Düsenschlitze (15) oder Düsenreihen (16) eine pfeilförmige Form mit einer mittig angeordneten Pfeilspitze aufweisen.

13. Behandlungsanlage nach einem der Ansprüche 1 bis 12, **dadurch gekennzeichnet, dass** die Düsenanordnung (8) an der vom Fahrzeug (4) abgewandten Seite eine Abdeckung (24) umfangseitige für die Düsenauslässe (13) aufweist.

14. Behandlungsanlage nach Anspruch 13, **dadurch gekennzeichnet, dass** die Abdeckung (24) als verstellbare Blende (25) ausgebildet ist.

15. Behandlungsanlage nach einem der Ansprüche 1 bis 14, **dadurch gekennzeichnet, dass** die Düsenanordnung (8) ein oder mehrere Antriebe (26) zum Drehen und translatorischen Bewegen, insbesondere Heben und Senken, aufweist.

16. Behandlungsanlage nach einem der Ansprüche 1 bis 15, **dadurch gekennzeichnet, dass** die Düsenanordnung (8) sich in Betriebsstellung entlang der beaufschlagten Fläche am Fahrzeug (4) erstreckt.

17. Behandlungsanlage nach Anspruch 16, **dadurch gekennzeichnet, dass** die Düsenanordnung (8) als im wesentlichen horizontale Dachdüse (11) oder als im wesentlichen vertikale Seitendüse (12) ausgebildet ist.

18. Behandlungsanlage nach einem der Ansprüche 1 bis 17, **dadurch gekennzeichnet, dass** die Düsenanordnung (8) in einem Portal (3) angeordnet ist.
